# EUROPÄISCHE PATENTSCHRIFT

(11) **EP 0 501 228 B1**
(45) Veröffentlichungstag und Bekanntmachung des Hinweises auf die Patenterteilung: **06.12.1995**
(21) Anmeldenummer: 92102357.8
(22) Anmeldetag: 13.02.1992
(51) Int. Cl.: B29C 45/20, B29C 45/62, B29C 45/60, B29C 45/23

(54) **Plastifizierzylinder an einer Kunststoff-Spritzgiessmaschine**
Plasticising cylinder of a plastic injection moulding machine
Cylindre de plastification d'une machine à mouler par injection les matières plastiques

(30) Priorität: 12.09.1991 DE 4130287; 23.02.1991 DE 4105730
(43) Veröffentlichungstag der Anmeldung: 02.09.1992
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 322 497
- EP-A- 0 483 541
- DE-B- 1 529 938
- FR-A- 2 255 162
- US-A- 4 154 536
- PATENT ABSTRACTS OF JAPAN vol. 15, no. 321 (M-1147) 15. August 1991 & JP-A-31 21 823 (KOMATSU)

## Beschreibung

Die Erfindung betrifft einen Plastifzierzylinder entsprechend dem Oberbegriff des Patentanspruches 1.

Unter 'Hochdruckraum' im Sinne des Oberbegriffes wird der während der Einspritzung des Kunststoffes in die Spritzgießform vor der Rückstromsperre befindliche Raum verstanden, der gegenüber dem Niederdruckraum hermetisch abgeschlossen ist. Das maximale Volumen des Hochdruckraumes ist durch eine 'maximale rückwärtige Ausgangslage' der Förderschnecke bestimmt. Von dieser Ausgangslage unterscheidet sich eine aktuelle rückwärtige Ausgangslage der Förderschnecke, die durch das jeweilige, für ein bestimmtes Spritzteil erforderliche Quantum an Kunststoff bestimmt ist.

Bei den üblichen Plastifizierzylindern grenzt die Fuge zwischen Düsenkörper und Plastifizierzylinder entlang der inneren Mantelfläche des Plastifizierzylinders an den Hochdruckraum an. Die Länge der beim Einspritzen des Kunststoffmaterials dem Druck des Hochdruckraumes exponierten Fugenmündung ist durch die lichte Weite des Hochdruckraumes bestimmt, also relativ groß. Während des Einspritzhubes können im Hochdruckraum Drücke bis zu 2.500 bar und höher auftreten, welche die genannte Fuge beaufschlagen. Um eine ausreichende Dichtung zwischen Düsenkörper und Plastifizierzylinder zu gewährleisten, ist es daher erforderlich, daß die Stirnfläche des Düsenkörpers mit extrem großem Anpreßdruck an der Stirnfläche des Plastifizierzylinders anliegt. Dieser Anpreßdruck bewirkt eine starke axiale Verkeilung der Gewindegänge der relativ langen Gewindebolzen mit den entsprechenden Gewindegängen der Innengewinde von Düsenkörper und Plastifizierzylinder.

Im Bereich der Verkeilung kann es bei längerem Spritzbetrieb zu 'Verbackungen' der Flanken der Gewindegänge kommen, weil diese sowohl im Düsenkörper als auch im Plastifizierzylinder sehr hohen Temperaturen ausgesetzt sind. In diesem Zusammenhang ist auf folgendes hinzuweisen: In neuerer Zeit kommen immer häufiger spritztechnisch problematische Stoffe und Stoffmischungen zur Verarbeitung, um besonderen Ansprüchen an die Eigenschaften der Spritzteile zu genügen. Unter den genannten Stoffen und Stoffmischungen befinden sich vielfach auch solche, die unter dem extremen Druck im Hochdruckraum korrosive Gase entbinden, die in die Fuge zwischen Düsenkörper und Plastifizierzylinder eindringen und zu den Gewindegängen der Gewindebolzen gelangen. Solche Gase können bei den hohen Hitzegraden eine weitere Verfestigung der Gewindebolzen im Gefolge von Korrosionsprozessen bewirken. Beim Düsenwechsel kann es daher aus den geschilderten Gründen beim Lösen der Gewindebolzen zu erheblichen Schwierigkeiten kommen. Solche Schwierigkeiten sind besonders ernst zu nehmen, weil das Düsenteil relativ häufig zu Reinigungs- und Reparaturzwecken auszuwechseln ist und im Reparaturfalle der Spritzbetrieb vielfach unterbrochen werden muß.

Zur Lösung dieser Problematik wurde bereits in der DE-AS 15 29 938 vorgeschlagen, einen als Einsatzstück ausgebildeten Düsenkörper durch ein Verbindungselement zumindest teilweise axial zu übergreifen, wobei in Bohrungen des Verbindungselementes Spannschrauben festgelegt sind, die an ihren Stirnseiten auf einen radialen Flansch des Düsenkörpers drücken. Um die entsprechenden Spannkräfte aufzubringen, ist das Verbindungselement mittels eines Bajonettverschlusses am Plastifizierzylinder gehalten. Die Haltekräfte werden dabei durch den Bajonettverschluß und die Dichtkräfte zur Hochdruckanpressung durch die Spannschrauben aufgebracht. Allerdings ist das Verbindungselement mit seinem Bajonettverschluß in einer zentrischen Ausnehmung des Plastifizierzylinders gelagert, so daß es trotz dieser Trennung von Halte- und Dichtkräften aufgrund der thermischen Belastung zu Verbackungen in diesem Bereich kommen kann, die zumindest das Lösen des Bajonettverschlusses erschweren. Aber auch die Spannschrauben sind noch in einem Bereich angeordnet, der einer erhöhten Wärmezufuhr ausgesetzt ist.

Aus der DE 37 44 519 C1 ist es auch bekannt, die Verbindung zwischen dem Düsenkörper und dem Plastifizierzylinder mit Hilfe einer Verbindungsmuffe herzustellen, welche mit dem Plastifizierzylinder verschraubt werden kann und einen axialen Druck auf den Düsenkörper ausübt. Bei einer solchen Ausbildung sind die problematischen Gewindegänge im Düsenkörper entbehrlich. Andererseits ist der Kraftaufwand zum Lösen der Verbindungsmuffe wesentlich größer als bei den einzelnen Gewindebolzen des gattungsgemäßen Plastifizierzylinders. Die Praxis hat gezeigt, daß eine solche Verbindungsmuffe nur mit schwerem Werkzeug, z.B. mit einem Gabelschlüssel gelöst werden kann, was wiederum vielfach nur mit Hilfe von Schlägen auf das Werkzeug möglich ist. Im übrigen ist zu berücksichtigen, daß ein Wechsel des Düsenkörpers vielfach vom Kunden selbst oder vom Kundendienst-Personal des Herstellerbetriebes im Betrieb des Kunden vorzunehmen ist. Besonders problematisch ist daher ein Düsenwechsel, wenn nur fachlich wenig qualifiziertes Personal ohne sachgerechtes Werkzeug zur Verfügung steht, oder wenn schweres Werkzeug an abgelegene Standorte z.B. in industriell wenig entwickelten Ländern von Spritzgießmaschinen zu transportieren ist.

Aus einer älteren Patentanmeldung mit dem Aktenzeichen P 40 34 784.2 ist ein Plastifizierzylinder gemäß dem Gattungsbegriff ebenfalls bekannt. Dieser bekannte Plastifizierzylinder kann dem Gegenstand der vorliegenden Patentanmeldung jedoch nicht entgegenstehen, weil sich bei dem bekannten Plastifizierzylinder die Verbindungsmuffe im Grenzbereich zwischen Hochdruckraum und Niederdruckraum befindet, wenn die Förderschnecke in ihrer maximalen rückwärtigen Ausgangslage ist.

Den bekannten Plastifizierzylindern ist gemeinsam, daß die wirksame Länge der Förderschnecke üblicherweise auf das 20-fache des Durchmessers der Förderschnecke begrenzt. Oft besteht jedoch der Bedarf, die Leistung der Spritzgießmaschine dadurch zu steigern, daß dem plastifizierten Kunststoff eine erhöhte Wärmeleistung zugeführt wird. Dies kann bei den bekannten Spritzgießmaschinen lediglich dadurch erreicht werden, daß den Heizmanschetten mehr Energie zugeführt wird. Aus verständlichen Gründen ist jedoch die Energiezuführung auf diese Weise nicht unbegrenzt möglich.

Hiervon ausgehend liegt der Erfindung die Aufgabe zugrunde, einen Plastifizierzylinder der eingangs genannten Gattung derart weiterzubilden, daß ein Wechsel oder Ersatz des Düsenkörpers oder eines Einsatzes einfacher, schneller und mit geringeren physischen Kräften und mit einfachem Werkzeug erfolgen kann und die grundsätzlichen Voraussetzungen für eine vermehrte Zufuhr von Energie geschaffen sind.

Diese Aufgabe wird durch einen Plastifizierzylinder mit den im Anspruch 1 genannten Merkmalen gelöst.

Dabei befinden sich die den Düsenkörper oder den Einsatz auf den Plastifizierzylinder pressenden Gewinde der Gewindebolzen im Eingriff mit den Innengewinden der Verbindungsmuffe. Sie sind daher den kritischen Hitzebereichen von Düsenkörper und Plastifizierzylinder entzogen. Zwar stellt die beim Düsenwechsel nicht zu lösende Gewindeverbindung zwischen Verbindungsmuffe und Plastifizierzylinder eine thermische Brücke dar, doch liegt die Temperatur im Bereich der Gewindebolzen weit unter der Temperatur in Düsenkörper und Plastifizierzylinder. Außerdem sind die beanspruchten Gewindeabschnitte der Gewindebolzen wesentlich kürzer als die der gattungsgemäßen Gewindebolzen. Ein Vordringen von korrosiven Gasen, die evtl. aus dem plastifizierten Material austreten, in den Bereich der Gewindegänge ist nahezu ausgeschlossen. Ein 'Verbacken' der ineinandergreifenden Gewindegänge ist daher nicht möglich.

Insofern kann der Düsenkörper, aber auch der Einsatz bei einem wesentlich geringeren Einsatz an physischer Kraft sowie mit leichtem und leicht zu handhabendem Werkzeug gewechselt oder ersetzt werden, zumal der erforderliche axiale Anpreßdruck durch eine Vielzahl von Gewindebolzen erzeugt wird und somit der jeweilige maximale Einsatz von Werkzeug und physischer Kraft auf viele einzelne Gewindebolzen verteilt ist. Das Montage- bzw. Service-Personal kann daher das Werkzeug praktisch in einer Aktentasche mitführen.

Um das Vielfache geringere Anpreßdrücke an den feinbearbeiteten Stirnflächen von Düsenkörper oder Einsatz und Plastifizierzylinder sind erforderlich, wenn nach Anspruch 7 diese konkreten Anlageflächen wesentlich verringert sind oder wenn gemäß den Ansprüchen 5, 6 der Düsenkörper derart verlängert ist, daß der Hochdruckraum vom Düsenkörper bei maximaler rückwärtiger Ausgangslage der Förderschnecke vollständig eingeschlossen ist und demzufolge die Fuge zwischen Düsenkörper und Plastifizierzylinder in den Niederdruckraum mündet. Dadurch ist das Problem des Düsenwechsels prinzipiell entschärft, weil wesentlich geringere Anpreßdrücke zu erzeugen und daher auch geringere Verspannungen in den Gewinden zu verzeichnen sind.

Dadurch ist der Hersteller in der Lage, bedarfsweise den Plastifizierzylinder in einer Variante mit relativ kurzem Düsenkörper und einer Variante mit relativ langem Düsenkörper anzubieten, wobei gemäß Anspruch 6 der kurze Düsenkörper bei in vorderster Endlage befindlicher Förderschnecke rückseitig vor der Sperrebene der Rückstromsperre und der relativ lange Düsenkörper bei in maximaler rückwärtiger Ausgangslage befindlicher Förderschnecke hinter der Sperrebene der Rückstromsperre endet. Die Bereitstellung der genannten Varianten ist ohne eine ins Gewicht fallende Erhöhung der Fertigungskosten möglich, wen nbei einem mit kurzem Düsenkörper ausgerüsteten Plastifizierzylinder das aus Düsenkörper und Plastifizierzylinder zusammengefügte Aggregat identisch ist mit dem entsprechenden Aggregat bei einem mit langem Düsenkörper ausgerüsteten Plastifizierzylinder, denn auf diese Weise sind nach dem Baukastenprinzip mit nur wenigen unterschiedlichen Bauteilen bei relativ geringer Lagerhaltung die genannten Varianten zur fertigen, zu denen die erforderlichen Heizorgane, Düsenverschlußorgane und sonstigen Steuerungsorgane gleichermaßen passen.

Dieses Baukastensystem ermöglicht aber auch eine Verlängerung des Plastifizierzylinders durch einen Einsatz, der anstelle des Düsenkörpers auf den Plastifizierzylinder aufgesetzt wird. Hier wirkt sich auch die leichte Lösbarkeit des Düsenkörpers positiv aus, der seinerseits wiederum auf den Einsatz aufsetzbar ist. Auf diese Weise läßt sich eine erhöhte Homogenisierung des Materials dadurch erreichen, daß der Förderstrom nun über eine größere Länge erfolgt. Die Verlängerung kann somit sowohl durch verbesserte Pfastifizierung des Kunststoffmaterials als auch durch erhöhte Homogenisierung zur qualitativen Verbesserung der Spritzteile beitragen, insbesondere wenn auf dem verlängerten Bereich ein Mehr an Energie in Form von Bewegungs- oder Wärmeenregie zugeführt werden kann.

Verfügt der Einsatz nach Anspruch 9 stirnseitig über Anschlußorgane, die denen des Plastifizierzylinders entsprechen, so läßt sich ohne weiteres der abgenommene Düsenkörper wieder unmittelbar auf den Einsatz aufsetzen. Allerdings ist es statt dessen auch möglich, einfach den Einsatz, der ja eine Verlängerung des Plastifizierzylinders darstellt, und den zugehörigen Düsenkörper einstückig auszubilden.

Um zudem stets die Verwendung des Plastifizieraggregats mit oder ohne Verschlußdüse zu ermöglichen, besitzt der Einsatz nach den Ansprüchen 11 bis 12 bereits Aufnahmebohrungen für Thermofühler und Düsennadel, die den entsprechenden Aufnahmebohrungen des Plastifizierzylinders entsprechen. In diesem Falle muß dann, abgesehen von einer Verlängerung, die Betätigung der Verschlußnadel lediglich parallel nach unten versetzt werden.

Die gleichsam zu verlängernde Förderschnecke, die nunmehr ungefähr eine Länge aufweist, die dem 25-fachen des Schneckendurchmessers entspricht, kann entweder einstückig ausgebildet sein, oder es kann eine übliche Förderschnecke, die üblicherweise die 20-fache Länge des Schneckendurchmessers aufweist, durch entsprechende Einsatzstücke gemäß den Ansprüchen 14 bis 16 verlängert werden. Als Einsatzstücke kommen dabei sowohl weitere Schneckenabschnitte in Frage, als auch alternativ dazu Mischabschnitte. Gleichgültig, welche Art von Einsatzstück verwendet wird, so ist stets durch entsprechende Schäfte und Ausnehmungen gewährleistet, daß die Schnecke auf einfache Weise durch Zusammenschrauben der Einzelteile verlängert werden kann. Sämtliche Verbindungen sind so ausgebildet, wie die bereits an der Spritzgießmaschine vorzufindende Verbindung zwischen Rückstromsperre und Förderschnecke, die aus einem Schaft an der Rückstromsperre und einer dazugehörigen Ausnehmung an der Förderschnecke besteht. Je nach Wunsch kann der Mischabschnitt direkt an die 'Standard'-Förderschnecke anschließen, oder es kann zunächst ein weiterer Schneckenabschnitt als Einsatzstück vor dem eigentlichen Mischabschnitt eingesetzt werden.

Wird der Mischabschnitt dabei entsprechend Anspruch 16 ausgebildet, so kann eine erhöhte Durchmischung erreicht werden, wie sie insbesondere beim Beimischen von Farbstoffen zu einem Grundmaterial erwünscht ist. Der Mischabschnitt besteht dabei abweichend von üblichen Mischelementen nicht aus Mischerarmen, sondern aus scheibenförmigen Mischelementen, die den Zylinderraum nahezu vollständig ausfüllen. Um dennoch eine Durchmischung und ein Weiterbefördern des Kunststoffmaterials zu ermöglichen, besitzen diese Mischelemente randständige Nuten, die schraubenförmig versetzt auf den einzelnen scheibenförmigen Mischelementen angeordnet sind und den Durchtritt des herangeförderten Materials erlauben. Der Versatzwinkel in Drehrichtung der Förderschnecke ist dabei jedoch gegenüber dem Steigungswinkel der Förderschnecke herabgesetzt, so daß der Drall, der dem Material durch die Beförderung entlang der Förderschnecke aufgezwungen worden ist, systematisch unterbrochen wird und dadurch eine erhöhte Durchmischung erreicht werden kann.

Dabei ist ferner die Fuge zwischen dem Einsatz und dem Plastifizierzylinder so weit nach hinten versetzt, daß sie stets an den Niederdruckraum angrenzt, selbst wenn die Rückstromsperre beim Axialhub maximal zurückgestellt wird (üblicherweise etwa um das 3-fache des Schneckendurchmessers).

Nachstehend wird die Erfindung anhand der Zeichnung an zwei Ausführungsbeispielen erläutert.

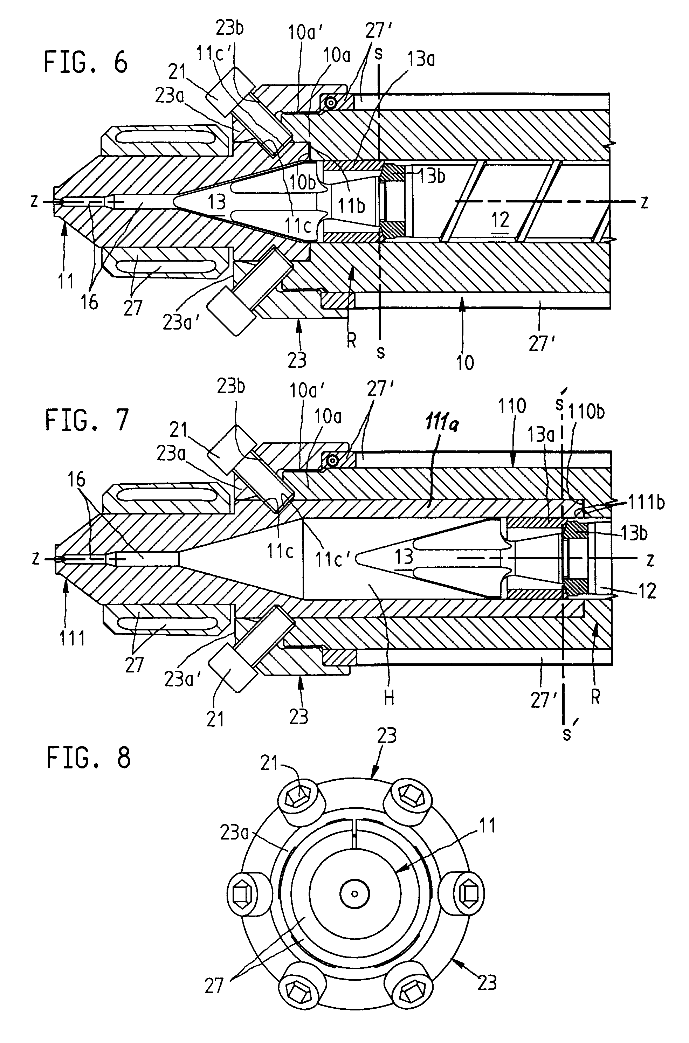

Es zeigen:
- Fig. 1: den Plastifizierzylinder mit dem Düsenkörper in Seitenansicht, teilweise vertikal geschnitten,
- Fig. 2: einen Ausschnitt aus Fig. 1 in vergrößerter Darstellung,
- Fig. 3: das perspektivisch dargestellte düsenseitige Ende des Plastifizierzylinders im vertikalen Schnitt,
- Fig. 4: das vordere Ende des Plastifizierzylinders, den Düsenkörper, die Gewindemuffe sowie die Bauteile der Rückstromsperre in Explosionszeichnung, teilweise vertikal geschnitten,
- Fig. 5: ein weiteres Ausführungsbeispiel des Plastifizierzylin ders in einer ungefähren Darstellung gemäß Fig. 2,
- Fig. 6,7: die Ausführungsbeispiele der Figuren 1-4 einerseits und Fig. 5 andererseits in einer vergleichbaren Darstellung und
- Fig. 8: den mit einer Heizmanschette versehenen Düsenkörper mit Gewindemuffe und Gewindebolzen in Stirnansicht.
- Fig. 9: den durch den Einsatz verlängerten Plastifizierzylinder teilweise geschnitten in einer Seitenansicht,
- Fig. 10: eine Ansicht entsprechend Fig. 9 unter Einsatz einer Verschlußdüse
- Fig. 11: die Rückstromsperre in vergrößerter Darstellung,
- Fig. 12,13: verschiedene Einsatzstücke in vergrößerter Darstellung,
- Fig. 14: die aus den Teilen von Fig. 11 bis 13 zusammengesetzte Förderschnecke,
Beim Spritzbetrieb transportiert eine rotierbare Förderschnecke 12 im beheizbaren Plastifizierzylinder 10 den plastifizierten Kunststoff in einen Hochdruckraum H vor die zurückweichende Förderschnecke. Sodann wird der Kunststoff durch einen axialen Hub der Förderschnecke 12 über den Düsenkanal 16 in eine Spritzgießform eingespritzt. Eine bei diesem Hub wirksame Rückstromsperre R schließt den sich beim Hub stetig verkleinernden Hochdruckraum H gegenüber einem die Förderschnecke 12 enthaltenden Niederdruckraum N ab. Der zylindrische Hochdruckraum H verjüngt sich in einem axialen Abschnitt a des Düsenkörpers 11 bis auf die lichte Weite des Düsenkanals 16. Düsenkörper 11 oder Einsatz 14 und Plastifizierzylinder 10 sind mittels einer Vielzahl von auf einer Kreislinie angeordneter Gewindebolzen 21,121 im Bereich feinbearbeiteter Stirnflächen 11b,14b und 10b axial gegeneinander preßbar. Eine den Plastifizierzylinder 10 im düsenseitigen Bereich des Hochdruckraumes H umschließendende und den Düsenkörper 11 oder den Einsatz 14 teilweise axial übergreifende als Verbindungselement ausgebildete Verbindungsmuffe 23,123 ist am Plastifizierzylinder 10 oder am Einsatz 14 befestigt. Die Befestigung ist dadurch bewirkt, daß die Verbindungsmuffe 23,123 mit Hilfe eines Innengewindes in ein Außengewinde 10a', 14a' des Flansches 10a,14a des Plastifizierzylinders 10 oder des Einsatzes 14 eingreift. Die mit Innengewinden 23b,123b von Bohrungen mit der Verbindungsmuffe 23,123 in Eingriff stehenden und dadurch axial abgestützen Gewindebolzen 21,121 greifen stirnseitig an radial nach außen versetzten Preßflächen 11c',14c' des Düsenkörpers 11 oder des Einsatzes 14 an. Die Gewindebolzen 21,121 schließen einen Winkel von ca. 45° zur Zylinderachse z-z ein und durchsetzen einen sich radial erstreckenden außen liegenden Flansch 23a der Verbindungsmuffe 23. Stirnseitig tauchen die Gewindebolzen 21,121 in Eingriffsmulden 11c,14c des Düsenkörpers 11 oder des Einsatzes 14 ein (Fign. 6, 7 bzw. 9,10). An der Basis dieser Eingriffsmulden 11c, 14c liegen die Preßflächen 11c',14c'.

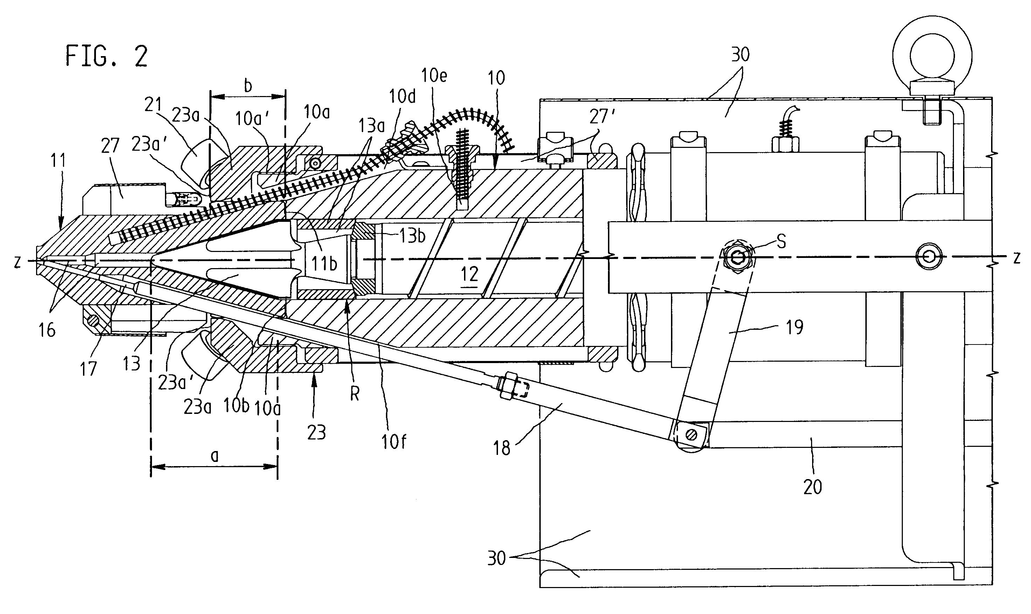

Der Düsenkörper 11 weist einen rückwärtigen Abschnitt b (Fig. 2) größeren Durchmessers auf. Die am Übergang zu diesem Abschnitt b gebildete Ringschulter ist bündig mit einer senkrecht zur Zylinderachse z-z stehenden Stirnfläche 23a' des Flansches 23a. Der Abschnitt b größeren Durchmessers des Düsenkörpers 11 ist von einem Flansch 10a des Plastifizierzylinders 10 teilweise axial übergriffen. Die Rückstromsperre R umfaßt einen an der Stirnseite der Förderschnecke 12 fixierten Sitzring 13b, einen Kopf 13, der über einen Schaft 13c mit der Förderschnecke 12 verbunden ist, sowie einen Dichtring 13a. Letzterer ist zwischen dem Sitzring 13b und dem Kopf 13 begrenzt axial verschieblich. Der Dichtring liegt bei gesperrtem Rückstrom rückseitig auf einer Stirnfläche des Sitzringes 13b auf, wie beispielsweise aus den Fign. 2, 6 ersichtlich.

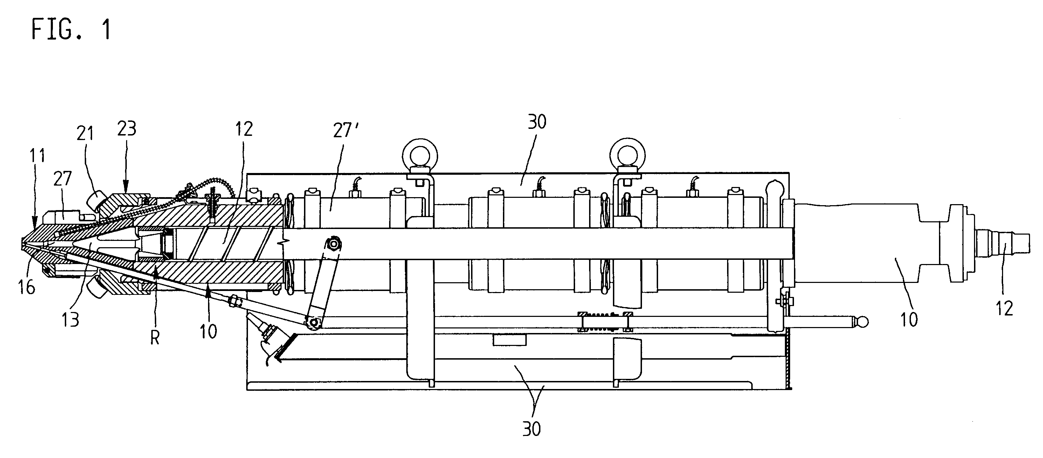

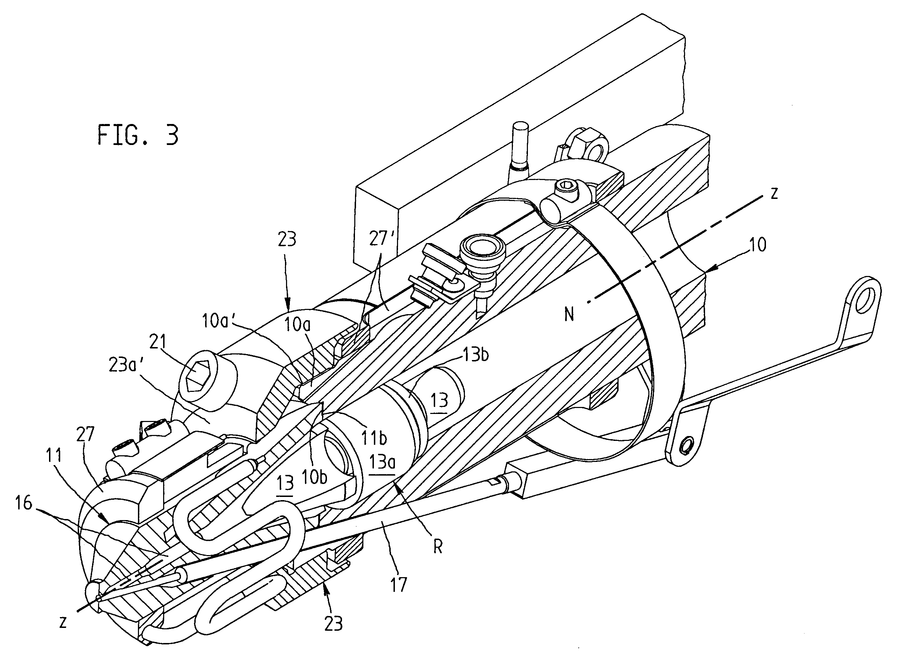

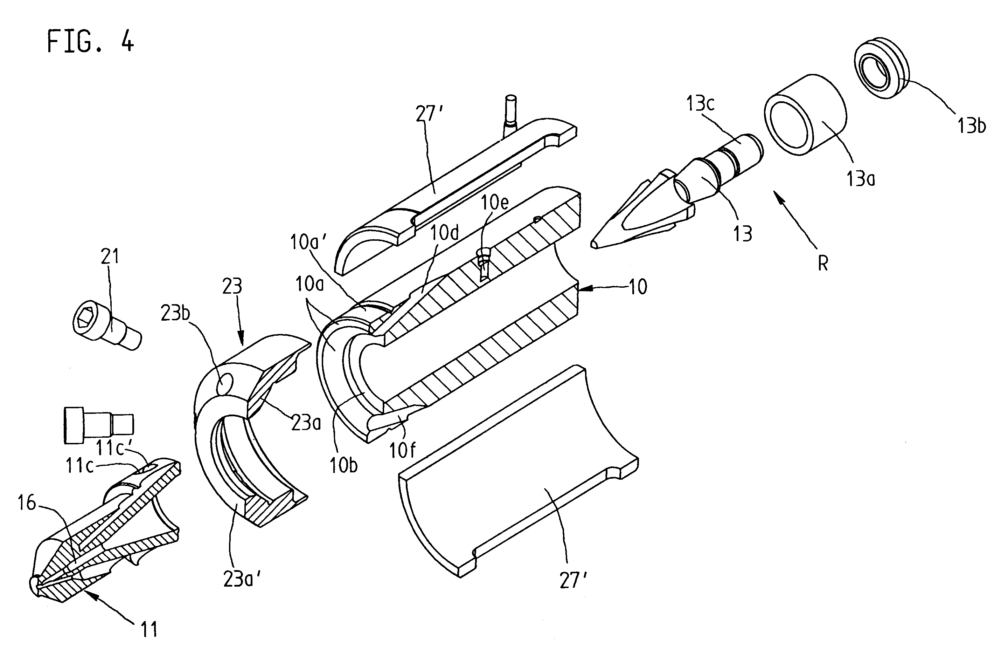

Im Ausführungsbeispiel der Figuren 1-4, 6 ist der Düsenkanal 16 etwa halb so lang wie der Düsenkörper 11. Demzufolge endet der Düsenkörper 11 bei vorderster Lage der Förderschnecke 12 rückseitig im Bereich der Stirnkante des Dichtringes 13a der Rückstromsperre R, also vor der Sperrebene s-s (Fig. 6) der Rückstromsperre R.

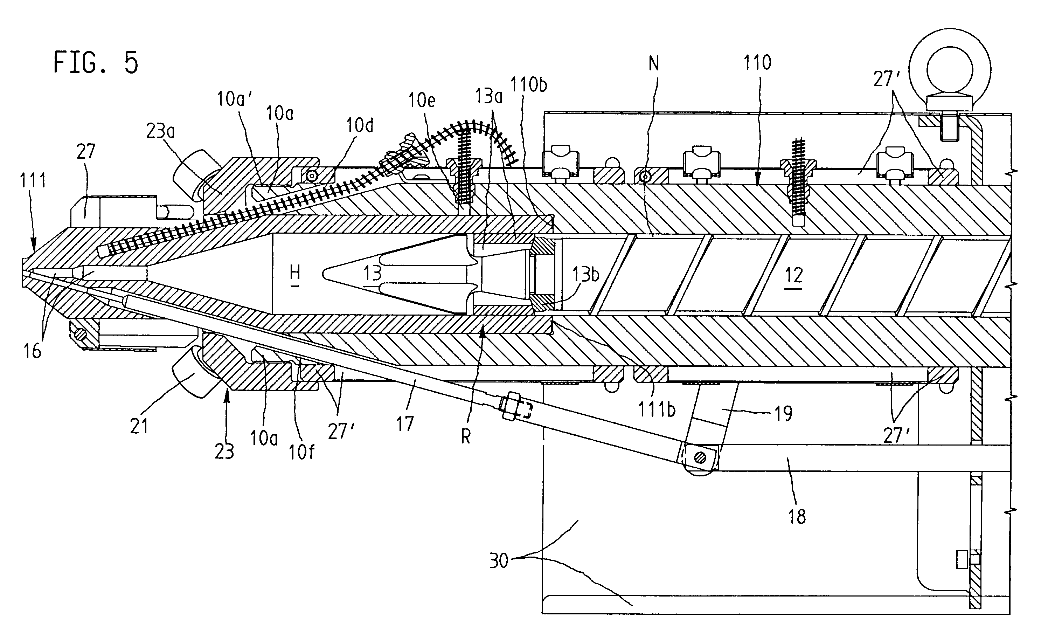

Bei einem weiteren Ausführungsbeispiel gemäß den Fig. 5, 7 ist der Düsenkörper 111 derart verlängert, daß der Hochdruckraum H vom Düsenkörper 111 auch bei maximaler rückwärtiger Ausgangslage der Förderschnecke 12 vollständig eingeschlossen ist. Dadurch grenzt die Fuge zwischen den aufeinandergepreßten Stirnflächen 111b; 110b von Düsenkörper 111 und Plastifizierzylinder 110 an den Niederdruckraum N an. Die Verlängerung des Düsenkörpers 111 ist ohne wesentliche Gewichtszunahme dadurch erreichbar, daß ein den Abschnitt b des Düsenkörpers 111 verlängernder zylindrischer Axialflansch 111a in einer entsprechenden ringförmigen Ausnehmung der Wandung des Plastifizierzylinders 110 eingepaßt ist. Damit sind die Unterschiede dieses Ausführungsbeispiels zu dem Ausführungsbeispiel gemäß den Figuren 1-4, 6 erschöpft. Im übrigen sind gleiche Bauteile der beiden Ausführungsbeispiele mit gleichen Bezugszeichen versehen.

Für eine rationelle Fertigung und für eine Erleichterung des Services und des Ersatzteilgeschäftes ist von Bedeutung, daß beim Ausführungsbeispiel der Figuren 1-4, 6, also bei einem mit einem kurzen Düsenkörper 11 ausgerüsteten Plastifizierzylinder 10, das aus Düsenkörper 11 und Plastifizierzylinder 10 zusammengefügte Aggregat hinsichtlich seiner Gestalt identisch ist mit dem entsprechenden Aggregat 111; 110 beim Ausführungsbeispiel der Fign. 5, 7, also bei einem Plastifizierzylinder mit einem verlängerten Düsenkörper 111. Dieser verlängerte Düsenkörper 111 endet bei maximaler rückwärtiger Ausgangslage der Förderschnecke 12 hinter der Sperrebene s'-s' (Fig. 5) der Rückstromsperre R.

Eine ausreichende Abdichtung der Fuge zwischen dem Düsenkörper 11 bzw. 111 und dem Plastifizierzylinder 10 bzw. 110 ist bei geringerem Anpreßdruck dadurch erreichbar, daß die Stirnflächen 11b, 111b; 10b, 110b von Düsenkörper 11; 111 und Plastifizierzylinder 10; 110 nur in einem kleinen, an die innere Mantelfläche des Plastifizierzylinders 10; 110 angrenzenden ringförmigen Bereich feinbearbeitet sind.

Eine Verlängerung des Plastifizierzylinders kann dadurch erreicht werden, daß an das Außengewinde 10a' eines Flansches 10a des Plastifizierzylinders anstelle der Verbindungsmuffe 23 nun die Verbindungsmuffe 123 somit also an die bereits vorhandenen Anschlußorgane des Plastifizierzylinders angeschlossen wird. Diese weitere Verbindungsmuffe 123 umschließt den Plastifizierzylinder im Bereich des Niederdruckraumes, so daß die Fuge zwischen den Stirnflächen 14b',10b selbst bei maximaler rückwärtiger Stellung der Förderschnecke 12 nie mit dem Hochdruckraum H in Verbindung steht.

Der Einsatz ist dabei einem Düsenkörper insoweit nachgebildet, daß die Stirnflächen 10b,14b' von Plastifizierzylinder und Einsatz so in einer stirnseitigen Ausnehmung 10c aufeinanderstoßen, daß der die Förderschnecke aufnehmende Zylinderraum eine durchgehende Mantelfläche erhält. Der Einsatz 14 verfügt stirnseitig über einen Flansch 14a mit Außengewinde 14a' und Stirnfläche 14b. Dabei greift das Außengewinde 14a' in das Innengewinde der Verbindungsmuffe 23 zum Anschluß des Düsenkörpers in bereits beschriebener Weise ein. Alternativ besteht jedoch auch die Möglichkeit, Einsatz 14 und Düsenkörper 11 einstückig auszubilden.

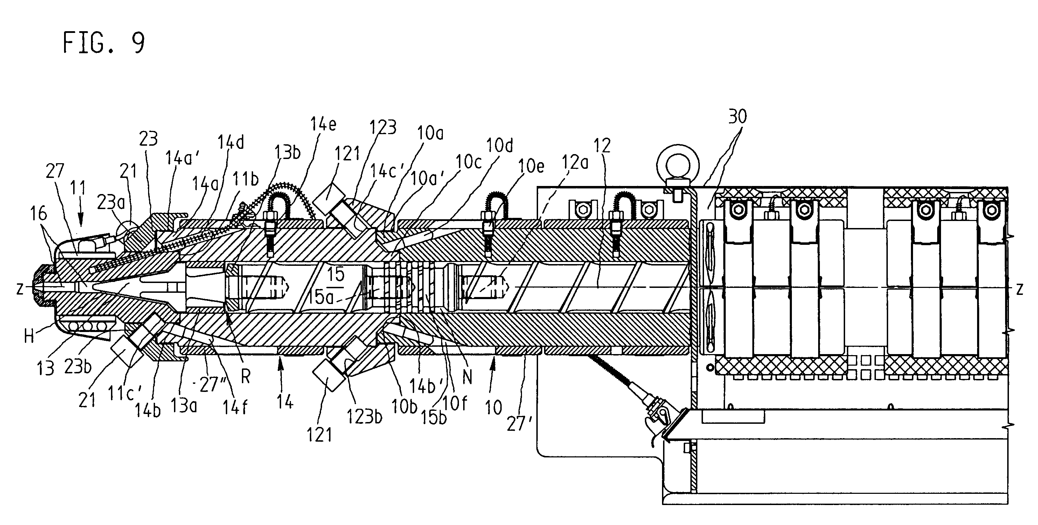

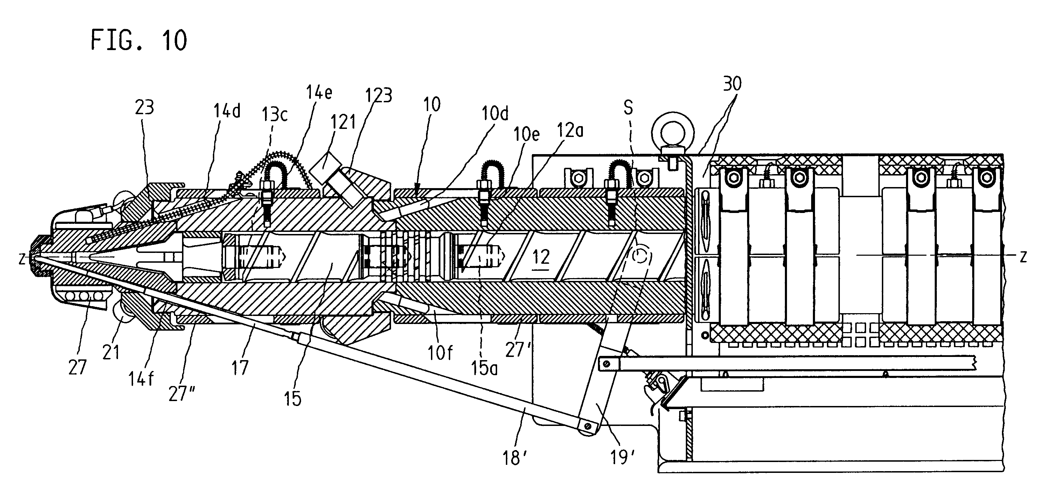

Beim Ausführungsbeispiel der Figur 10 wird der Plastifizierzylinder zusammen mit einer Verschlußdüse verwendet. Um diese Anwendung jederzeit zu ermöglichen, besitzen sowohl der Plastifizierzylinder 10, als auch der Einsatz 14, in Figur 9 funktionslose Aufnahmebohrungen 10d,10e,10f bzw. 14d,14e,14f zur Aufnahme der Thermofühler bzw. der Düsennadel 17. Somit kann selbst bei einer Verlängerung auf einfache Weise dennoch der Verschluß des Düsenkanals bewirkt werden. Wie sich aus einem Vergleich der Figuren 2 und 10 ergibt, muß dazu lediglich der Schwenkhebel 19 durch den Schwenkhebel 19' ersetzt werden, der eine tiefere Anlenkung der nunmehr gegenüber der ursprünglichen Anlenkstange 18 verlängerten Anlenkstange 18' ermöglicht. Bei diesem erforderlichen Umbau bleibt dennoch der Angriffspunkt für die Betätigungsstange 20 stets in gleichem Abstand vom Schwenkpunkt S des Schwenkhebels 19,19'.

In diesem verlängerten Plastifizierzylinder kann nunmehr entweder eine verlängerte Förderschnecke Verwendung finden, oder eine mehrstückige Förderschnecke, die aus der ursprünglichen Förderschnecke 12 und verschiedensten Einsatzstücken 15 zusammengesetzt ist. Insgesamt ist eine Verlängerung um das Fünffache des Durchmessers der Förderschnecke bewirkt, so daß nunmehr eine wirksame Länge der Förderschnecke vom 25-fachen des Schneckendurchmessers erreicht ist. Bei Verwendung von zusammengesetzten Förderschnecken, kann in der Ausnehmung 12a, in der üblicherweise der Schaft 13c der Rückstromsperre befestigt ist, nun ein entsprechender Schaft der Einsatzstücke 15 eintauchen. Die Einsatzstücke 15 verfügen zudem stirnseitig über entsprechende Ausnehmungen 15a, in die entweder weitere Einsatzstücke oder die Rückstromsperre mit ihrem Schaft 13c bzw. 15c eintauchen kann. Durch die Verlängerung kann sowohl die erhöhte Zufuhr von Energie als auch eine erhöhte Homogenisierung erreicht werden. Um die Homogenisierung und Durchmischung weiter zu steigern, kann aber auch an beliebiger Stelle im Bereich der Verlängerung als Einsatzstück ein Mischabschnitt eingesetzt werden, der über Mischelemente verfügt.

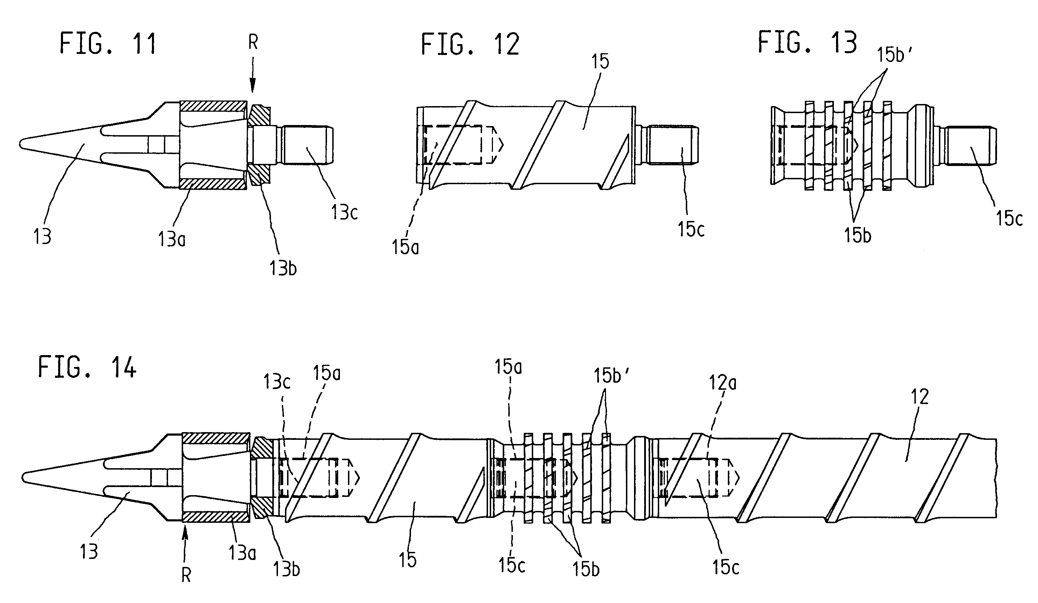

Beim vorliegenden Ausführungsbeispiel werden als Mischelemente 15b Scheiben verwendet, die senkrecht zur Zylinderachse z-z angeordnet sind und deren Durchmesser ungefähr dem Durchmesser der Schnecke entspricht. Um dennoch durch diese Scheiben hindurch eine Weiterbeförderung des Materialstroms zu erreichen, besitzen die Scheiben randständige, nutenförmige Ausnehmungen 15b', die in Drehrichtung um einen bestimmten Winkel gegeneinander versetzt sind. Das Material wird also kommend von der Förderschnecke durch diese Ausnehmungen hindurch weiter nach vorne gedrückt. Dabei stehen diese Ausnehmungen in einem Winkel zueinander, der gegenüber der Zylinderachse kleiner ist, als der Steigungswinkel der Förderschnecke. Durch diese Anordnung wird erreicht, daß der von der Beförderung durch die Förderschnecke vorbestimmte Drall im Bereich des Mischabschnittes unterbrochen wird und dadurch eine erhöhte Durchmischung stattfinden kann (Fig. 13).

Das bedarfsweise gewünschte Mehr an Energie kann zusätzlich zu den Heizmanschetten 27,27' von Düsenkörper 11 bzw. 111 Plastifizierzylinder 10 bzw. 110 über die Heizmanschette 27'' des Einsatzes 14 aufgebracht werden.Im übrigen ist der Plastifizierzylinder 10 bzw. 110 von einer Schutzabdeckung 30 umschlossen.

## Patentansprüche

1. Beheizbarer Plastifizierzylinder (10) einer Kunststoff-Spritzgießmaschine mit beheizbarem Düsenkörper (11) und rotierbarer Förderschnecke (12) mit einem Hochdruckraum (H), mit einer Rückstromsperre (R) und mit einem die Förderschnecke (12) enthaltenden Niederdruckraum (N), wobei sich der zylindrische Hochdruckraum (H) in einem axialen Abschnitt (a) des Düsenkörpers (11) bis auf die lichte Weite des Düsenkanals (16) verjüngt, sowie mit einem im düsenseitigen Bereich des Hochdruckraums (H) angeordneten und Düsenkörper (11) oder einen Einsatz (14) teilweise axial übergreifenden, am Plastifizierzylinder (10) befestigten Verbindungselement und mit einer Vielzahl von etwa auf einer Kreislinie angeordneten Gewindebolzen (21), die mit Innengewinden des Verbindungselements in Eingriff stehen und dadurch axial abgestützt stirnseitig an Preßflächen (11c', 14c') des Düsenkörers (11) oder des Einsatzes (14) angreifen, dadurch gekennzeichnet, daß das Verbindungselement als eine den Plastifizierzylinder (10) umschließende und den Düsenkörper (11) oder einen Einsatz teilweise axial übergreifende Verbindungsmuffe (23) ausgebildet ist und daß die Gewindebolzen (21, 121) einen sich radial erstreckenden außen liegenden Flansch (23a) der Verbindungsmuffe (23, 123) durchsetzen.

2. Plastifizierzylinder nach Anspruch 1, dadurch gekennzeichnet, daß die Gewindebolzen einen Winkel zur Zylinderachse (z-z) einschließen und stirnseitig in Eingriffsmulden (11c, 14c) des Düsenkörpers (11) oder des Einsatzes (14) eintauchen, an deren Basis die Preßflächen (11c', 14c') liegen.

3. Plastifizierzylinder nach Anspruch 1 oder 2, dadurch gekennzeichnet, daß die Verbindungsmuffe (23,123) mit Hilfe eines Innengewindes in ein Außengewinde (10a',14a') des Plastifizierzylinders (10) oder des Einsatzes (14) eingreift.

4. Plastifizierzylinder nach einem der vorhergehenden Ansprüche, dadurch gekennzeichnet, daß der Düsenkanal (16) etwa halb so lang ist wie der Düsenkörper (11 in Fig. 6), der bei vorderster Lage der Förderschnecke (12) rückseitig im Bereich der Stirnkante des Dichtringes (13a) der Rückstromsperre (R) endet.

5. Plastifizierzylinder nach einem der vorhergehenden Ansprüche, gekennzeichnet durch eine derartige Verlängerung des Düsenkörpers (111), daß der Hochdruckraum (H) vom Düsenkörper (111) auch bei maximaler rückwärtiger Ausgangslage der Förderschnecke (12) vollständig eingeschlossen ist, wobei die Fuge zwischen den aufeinandergepreßten Stirnflächen (111b; 110b) von Düsenkörper (111) und Plastifizierzylinder (110) an den Niederdruckraum (N) angrenzt.

6. Plastifizierzylinder nach einem der vorhergehenden Ansprüche, dadurch gekennzeichnet, daß bei einem mit einem kurzen Düsenkörper (11) ausgerüsteten Plastifizierzylinder (10) das aus Düsenkörper (11) und Plastifizierzylinder (10) zusammengefügte Aggregat hinsichtlich seiner Gestalt identisch ist mit dem entsprechenden Aggregat (111; 110) bei einem mit langem Düsenkörper (111) ausgerüsteten Plastifizierzylinder (110) und daß der kurze Düsenkörper (11) bei in vorderster Endlage befindlicher Förderschnecke (12) rückseitig vor der Sperrebene (s-s) der Rückstromsperre endet (Fig. 6) und der lange Düsenkörper (111) bei in maximaler rückwärtiger Ausgangslage befindlicher Förderschnecke (12) hinter der Sperrebene (s'-s') der Rückstromsperre (R) endet (Fig. 7).

7. Plastifizierzylinder nach einem der vorhergehenden Ansprüche, dadurch gekennzeichnet, daß die Stirnflächen (11b, 111b; 10b, 110b) von Düsenkörper (11; 111) und Plastifizierzylinder (10; 110) nur in einem kleinen, an die innere Mantelfläche des Plastifizierzylinders (10; 110) angrenzenden ringförmigen Bereich feinbearbeitet sind.

8. Plastifizierzylinder nach einem der vorhergehenden Ansprüche, dadurch gekennzeichnet, daß anstelle des Düsenkörpers der den Plastifizierzylinder (10) verlängernde Einsatz (14) einfügbar ist, dessen rückseitige Anschlußorgane denen des Düsenkörpers entsprechen.

9. Plastifizierzylinder nach einem der vorhergehenden Ansprüche, dadurch gekennzeichnet, daß der Einsatz (14) stirnseitig weitere Anschlußorgane (Flansch 14a mit Außengewinde 14a') aufweist, die den am Plastifizierzylinder (10) für den Anschluß des Düsenkörpers (11) vorgesehenen Anschlußorganen entsprechen.

10. Plastifizierzylinder nach einem der vorhergehenden Ansprüche, dadurch gekennzeichnet, daß der Einsatz (14) unter Bildung einer durchgehenden Mantelfläche des die Förderschnecke (12) aufnehmenden Zylinderraumes in eine stirnseitige Ausnehmung (10c) des Plastifizierzylinders (10) eingreift.

11. Plastifizierzylinder nach einem der vorhergehenden Ansprüche, dadurch gekennzeichnet, daß der Einsatz (14) über dem Plastifizierzylinder (10) entsprechende Aufnahmebohrungen (14d,14e,14f) für Thermofühler und Düsennadel (17) verfügt.

12. Plastifizierzylinder nach einem der vorhergehenden Ansprüche, dadurch gekennzeichnet, daß bei Verwendung einer Verschlußdüse am Einsatz (14) des Plastifizierzylinders (10) die Düsennadel (17) über eine verlängerte Anlenkstange (18') und über einen verlängerten Schwenkhebel (19') angelenkt ist, wobei eine Betätigung der Düsennadel (17) durch die Aufnahmebohrung (14f) im Einsatz (14) des Plastifizierzylinders (10) erfolgt und daß sich der Angriffspunkt der Betätigungsstange (20) am Schwenkhebel (19') bei Verwendung des Einsatzes (14) ungefähr im gleichen Abstand zum Schwenkpunkt (S) des Schwenkhebels befindet wie ohne Verwendung des Einsatzes.

13. Plastifizierzylinder nach einem der vorhergehenden Ansprüche, dadurch gekennzeichnet, daß im verlängerten Plastifizierzylinder (10,14) eine verlängerte Förderschnecke derart aufgenommen ist, daß auch bei maximaler rückwärtiger Ausgangslage der Förderschnecke die Fuge zwischen den aufeinandergepreßten Stirnflächen (10b,14b') von Einsatz (14) und Plastifizierzylinder (10) an den Niederdruckraum (N) angrenzt.

14. Plastifizierzylinder nach Anspruch 13, dadurch gekennzeichnet, daß die Förderschnecke (12) durch Einsatzstücke (15) verlängert ist, die rückseitig über einen Schaft verfügen, der dem Schaft der Rückstromsperre (R) entspricht, und damit in entsprechende Ausnehmungen (12a) eintauchen und stirnseitig bedarfsweise Ausnehmungen (15a) aufweisen, in denen der Schaft weiterer Einsatzstücke (15) oder der Schaft der Rückstromsperre (R) aufnehmbar ist.

15. Plastifizierzylinder nach Anspruch 14, dadurch gekennzeichnet, daß als Einsatzstück (15) ein Mischabschnitt einsetzbar ist (Fig. 14).

16. Plastifizierzylinder nach Anspruch 15, dadurch gekennzeichnet, daß der Mischabschnitt senkrecht zur Zylinderachse (z-z) stehende, scheibenförmige Mischelemente (15b) aufweist, deren Durchmesser ungefähr dem Durchmesser der Schnecke (12) entspricht, und die randständige, nutenförmige Ausnehmungen (15b') aufweisen, die von Scheibe zu Scheibe in der beim Fördern auftretenden Drehrichtung um einen Winkel versetzt sind.

## Claims

1. Heatable plasticising cylinder (10) of a plastics material injection moulding machine having a heatable nozzle body (11) and a rotatable feed screw (12) having a high-pressure chamber (H), with a non-return means (R) and having a low-pressure chamber (N) containing the feed screw (12), the cylindrical high-pressure chamber (H) tapering in an axial portion (a) of the nozzle body (11) to the diameter of the nozzle passage (16), and also having a connecting element which is secured to the plasticising cylinder (10), partially engages over the nozzle body (11) or an insert (14) in an axial manner and is disposed in the nozzle region of the high-pressure chamber (H) and having a plurality of threaded bolts (21), which are approximately circularly disposed and engage with internal threads of the connecting element and thereby in an axially supported manner cooperate at the end face with pressing surfaces (11c', 14c') of the nozzle body (11) or the insert (14),
characterised in that the connecting element is configured as a connecting sleeve (23) which partially engages over the nozzle body (11) or the insert (14) in an axial manner and surrounds the plasticising cylinder (10) and in that the threaded bolts (21, 121) pass through a flange (23a) of the connecting sleeve (23, 123), which flange lies on the outside and extends in a radial direction.

2. Plasticising cylinder according to claim 1, characterised in that the threaded bolts subtend an angle to the cylinder axis (z-z) and at the end face engage contact depressions (11c, 14c) of the nozzle body (11) or of the insert (14), on the bottoms of which lie the pressing surfaces (11c', 14c').

3. Plasticising cylinder according to claim 1 or 2, characterised in that the connecting sleeve (23, 123) engages an external thread (10a', 14a') of the plasticising cylinder (10) or of the insert (14) by means of an internal thread.

4. Plasticising cylinder according to one of the preceding claims, characterised in that the nozzle passage (16) is approximately half as long as the nozzle body (11 in Figure 6) which, when the feed screw (12) in the foremost position, terminates at the rear in the region of the front edge of the sealing ring (13a) of the non-return means (R).

5. Plasticising cylinder according to one of the preceding claims, characterised by an extension of the nozzle body (111) such that the high-pressure chamber (H) is completely enclosed by the nozzle body (11) even when the feed screw is in the rearmost starting position, the join between the front faces pressed together (111b; 110b) of nozzle body (111) and plasticising cylinder (110) bordering onto the low-pressure chamber (N).

6. Plasticising cylinder according to one of the preceding claims, characterised in that with a plasticising cylinder (10) equipped with a short nozzle body (11), the unit comprised by nozzle body (11) and plasticising cylinder (10) is identical as regards form to the corresponding unit (111; 110) with a plasticising cylinder (110) equipped with a long nozzle body (111) and in that the short nozzle body (11), when the feed screw is in the foremost position, terminates at the back in front of the sealing plane (s-s) of the non-return means (R) (Figure 6) and the long nozzle body (111), when the feed screw (12) is in the rearmost starting position, terminates behind the sealing plane (s'-s') of the non-return means (R) (Figure 7).

7. Plasticising cylinder according to one of the preceding claims, characterised in that the front faces (11b, 111b; 10b, 110b) of nozzle body (11; 111) and plasticising cylinder (10; 110) are only machine finished in a small, annular region which abuts the inside surface area of the plasticising cylinder (10; 110).

8. Plasticising cylinder according to one of the preceding claims, characterised in that in place of the nozzle body, the insert (14) extending the plasticising cylinder (10) can be used, the connecting members at the back of which correspond to those of the nozzle body.

9. Plasticising cylinder according to one of the preceding claims, characterised in that the insert (14) has additional connecting members (flange 14a with external thread 14a') at the front, which correspond to the connecting members provided on the plasticising cylinder (10) for the connection of the node body (11).

10. Plasticising cylinder according to one of the preceding claims, characterised in that the insert (14), by forming a continuous surface area of the cylinder chamber accommodating the feed screw (12), engages in a front recess (10c) on the plasticising cylinder (10).

11. Plasticising cylinder according to one of the preceding claims, characterised in that the insert (14) has accommodation bores (14d, 14e, 14f) for heat sensor and nozzle needle (17') corresponding to the plasticising cylinder (10).

12. Plasticising cylinder according to one of the preceding claims, characterised in that when a sealing nozzle is used on the insert (14) of the plasticising cylinder (10), the nozzle needle (17') is pivoted by an extended pivot bar (18') and by an extended rocking lever (19'), the nozzle needle (17') being actuated through the accommodation bore (14f) in the insert (14) of the plasticising cylinder (10) and in that the point of engagement of the actuation bar (20) on the rocking lever (19'), when using the insert (14), is approximately at the same distance from the point of rocking (S) of the rocking lever as when no insert is used.

13. Plasticising cylinder according to one of the preceding claims, characterised in that in the extended plasticising cylinder (10, 14) an extended feed screw is accommodated in such a manner that even when the feed screw is in the rearmost starting position, the join between the faces (10b, 14b') pressed together by insert (14) and plasticising cylinder (10) abuts the low-pressure chamber (N).

14. Plasticising cylinder according to claim 13, characterised in that the feed screw (12) is extended by means of insert pieces (15) which have a stem at the rear which corresponds with the stem of the non-return means (R), and consequently engage in corresponding recesses (12a) and have recesses (15a) at the front, if required, in which the stem of additional insert pieces (15) or the stem of the non-return means (R) can be accommodated.

15. Plasticising cylinder according to claim 14, characterised in that a mixing member (Figure 5) can be used as insert piece (15).

16. Plasticising cylinder according to claim 15, characterised in that the mixing member has disc-shaped mixing elements (15b) which are at right angles to the axis of the cylinder (z-z), the diameter of which mixing elements corresponds approximately to the diameter of the screw (12), and having marginal, groove-shaped recesses (15b') which are offset by an angle from disc to disc in the direction of rotation during the feed operation.

## Revendications

1. Cylindre de plastification chauffable (10) d'une machine à mouler par injection les matières plastiques pourvue d'un corps de buse chauffable (11) et d'une hélice transporteuse rotative (12), avec une chambre à haute pression (H), avec un élément antireflux (R) et avec une chambre à basse pression (N) contenant l'hélice transporteuse (12), la chambre à haute pression cylindrique (N) se rétrécissant jusqu'au diamètre intérieur du canal de buse (16) dans un tronçon axial (a) du corps de buse (11), ainsi qu'avec un élément d'assemblage disposé dans la région côté buse de la chambre à haute pression (H), fixé au cylindre de plastification (10) et recouvrant axialement partiellement le corps de buse (11) ou un insert (14), et avec une pluralité de goujons filetés (21) disposés environ sur un cercle, qui sont engagés dans des filetages femelles de l'élément d'assemblage et, ainsi axialement soutenus, agissent par leurs côtés frontaux sur des faces de pression (11c', 14c') du corps de buse (11) ou de l'insert (14),
**caractérisé** en ce que l'élément d'assemblage est réalisé sous la forme d'un manchon d'assemblage (23) entourant le cylindre de plastification (10) et recouvrant axialement partiellement le corps de buse (11) ou un insert, et en ce que les goujons filetés (21, 121) traversent une bride extérieure (23a) du manchon d'assemblage (23, 123), laquelle s'étend radialement.

2. Cylindre de plastification selon la revendication 1, **caractérisé** en ce que les goujons filetés forment un angle avec l'axe (z-z) du cylindre et s'enfoncent par leurs côtés frontaux dans des cuvettes d'engagement (11c, 14c) du corps de buse (11) ou de l'insert (14), à la base desquelles se trouvent les faces de pression (11c', 14c').

3. Cylindre de plastification selon la revendication 1 ou 2, **caractérisé** en ce que le manchon d'assemblage (23, 123) s'engage par un filetage femelle sur un filetage mâle (10a', 14a') du cylindre de plastifcation (10) ou de l'insert (14).

4. Cylindre de plastification selon l'une des revendications précédentes, **caractérisé** en ce que le canal de buse (16) est d'une longueur environ égale à la moitié de celle du corps de buse (11 sur la figure 6) qui, dans la position la plus avant de l'hélice transporteuse (12), se termine par son côté arrière dans la région du bord frontal de la bague d'étanchéité (13a) de l'élément antireflux (R).

5. Cylindre de plastification selon l'une des revendications précédentes, **caractérisé** par un prolongement du corps de buse (111) tel que la chambre à haute pression (H) est totalement incluse dans le corps de buse (111) même dans la position initiale la plus arrière de l'hélice transporteuse (12), le joint de séparation entre les faces frontales en application mutuelle (111b, 110b) du corps de buse (111) et du cylindre de plastification (110) étant limitrophe de la chambre à basse pression (N).

6. Cylindre de plastification selon l'une des revendications précédentes, **caractérisé** en ce que, pour un cylindre de plastification (10) équipé d'un corps de buse court (11), l'unité formée par l'assemblage du corps de buse (11) et du cylindre de plastification (10) est d'une configuration identique à l'unité correspondante (111 ; 110) pour un cylindre de plastifcation (110) équipé d'un corps de buse long (111), et en ce que le corps de buse court (11) se termine par son côté arrière, lorsque l'hélice transporteuse (12) se trouve dans sa position finale la plus avant, avant le plan d'isolement (s-s) de l'élément antireflux (figure 6), et le corps de buse long (111) se termine, lorsque l'hélice transporteuse (12) se trouve dans sa position initiale la plus arrière, après le plan d'isolement (s'-s') de l'élément antireflux (R) (figure 7).

7. Cylindre de plastification selon l'une des revendications précédentes, **caractérisé** en ce que les faces frontales (11b, 111b; 10b, 110b) du corps de buse (11 ; 111) et du cylindre de plastification (10 ; 110) ne reçoivent un finissage que dans une petite région annulaire, limitrophe de la face d'enveloppe intérieure du cylindre de plastification (10 ; 110).

8. Cylindre de plastification selon l'une des revendications précédentes, **caractérisé** en ce qu'on peut insérer à la place du corps de buse l'insert (14) prolongeant le cylindre de plastification (10), insert dont les organes de raccordement à l'arrière correspondent à ceux du corps de buse.

9. Cylindre de plastification selon l'une des revendications précédentes, **caractérisé** en ce que l'insert (14) présente sur son côté avant plusieurs organes de raccordement (bride 14a avec filetage mâle 14a') qui correspondent aux organes de raccordement prévus sur le cylindre de plastification (10) pour le raccordement du corps de buse (11).

10. Cylindre de plastification selon l'une des revendications précédentes, **caractérisé** en ce que l'insert (14) s'engage dans un évidement frontal (10c) du cylindre de plastification (10) en formant une face d'enveloppe ininterrompue pour la chambre cylindrique recevant l'hélice transporteuse (12).

11. Cylindre de plastification selon l'une des revendications précédentes, **caractérisé** en ce que l'insert (14) dispose de perçages récepteurs (14d, 14e, 14f), correspondants à ceux du cylindre de plastification (10) et destinés à recevoir des thermosondes et le pointeau (17).

12. Cylindre de plastification selon l'une des revendications précédentes, **caractérisé** en ce que, lorsqu'on utilise une buse à obturation, le pointeau (17) est articulé sur l'insert (14) du cylindre de plastification (10) au moyen d'une tringle d'articulation prolongée (18') et d'un levier pivotant prolongé (19'), l'actionnement du pointeau (17) s'effectuant par le perçage récepteur (14f) présent dans l'insert (14) du cylindre de plastification (10), et en ce que le point d'attaque de la tringle d'actionnement (20) sur le levier pivotant (19') lorsqu'on utilise l'insert (14) se trouve approximativement à la même distance du point de pivotement (S) du levier pivotant que lorsqu'on n'utilise pas d'insert.

13. Cylindre de plastification selon l'une des revendications précédentes, **caractérisé** en ce qu'une hélice transporteuse prolongée est reçue dans le cylindre de plastification prolongé (10, 14) de telle sorte que, même dans la position initiale la plus arrière de l'hélice transporteuse, le joint de séparation entre les faces frontales en application mutuelle (10b, 14'b) de l'insert (14) et du cylindre de plastification (10) est limitrophe de la chambre à basse pression (N).

14. Cylindre de plastification selon la revendication 13, **caractérisé** en ce que l'hélice transporteuse (12) est prolongée par des éléments d'insertion (15) qui disposent à l'arrière d'un corps correspondant au corps de l'élément antireflux (R) et s'enfoncent ainsi dans des évidements correspondants (12a), et qui présentent au besoin à l'avant des évidements (15a) dans lesquels peut être reçu le corps d'autres éléments d'insertion (15) ou le corps de l'élément antireflux (R).

15. Cylindre de plastification selon la revendication 14, **caractérisé** en ce qu'on peut intercaler comme élément d'insertion (15) un tronçon mélangeur (figure 14).

16. Cylindre de plastification selon la revendication 15, **caractérisé** en ce que le tronçon mélangeur présente des organes mélangeurs (15b) en forme de disques, perpendiculaires à l'axe (z-z) du cylindre, dont le diamètre correspond approximativement au diamètre de l'hélice (12) et qui présentent sur leurs bords des évidements (15b') en forme de rainures qui, d'un disque à l'autre, sont décalés d'un angle donné dans la direction de rotation existante lors du transport.
